# EUROPEAN PATENT SPECIFICATION

(11) **EP 4 476 162 B1**
(45) Date of publication and mention of the grant of the patent: **28.10.2026**
(21) Application number: 23753360.9
(22) Date of filing: 07.02.2023
(51) Int. Cl.: B66F 9/06, B25J 5/00, B25J 13/00, B25J 19/02, B66F 9/075, G05D 1/622, G05D 1/695, G05D 1/698, B66F 3/46, B66F 7/06, G05D 105/28, G05D 107/70, G05D 109/10

(54) **PALLET MANIPULATION AND PRODUCT TRANSPORT USING MULTI-ROBOT TEAMS**
PALETTENMANIPULATION UND PRODUKTTRANSPORT MIT MEHREREN ROBOTERTEAMS
MANIPULATION DE PALETTE ET TRANSPORT DE PRODUIT À L'AIDE D'ÉQUIPES MULTI-ROBOTS

(30) Priority: 11.02.2022 US 202263309263 P
(43) Date of publication of application: 18.12.2024
(73) Proprietor: Georgia Tech Research Corporation, Atlanta, GA 30318 (US)
(72) Inventor: BALAKIRSKY, Stephen, Atlanta, Georgia 30332 (US); AHLIN, Konrad, Atlanta, Georgia 30332 (US); USHER, Colin, Atlanta, Georgia 30332 (US)
(74) Representative: Wittmann, Günther
(86) International application number: PCT/US2023/012476
(87) International publication number: WO 2023/154261

(56) References cited:
- WO-A1-2021/083561
- DE-A1- 102016 107 451
- KR-A- 20100 073 771
- KR-B1- 101 319 045
- KR-B1- 101 319 045
- US-A1- 2004 024 527
- US-A1- 2014 309 809
- US-A1- 2015 148 951
- US-A1- 2015 251 713
- US-A1- 2019 270 375
- GUO LI ET AL: "A Master-Slave Separate Parallel Intelligent Mobile Robot Used for Autonomous Pallet Transportation", APPLIED SCIENCES, vol. 9, no. 3, 22 January 2019 (2019-01-22), pages 368, XP055669424, DOI: 10.3390/app9030368
- TEIXEIRA VIVALDINI KELEN ET AL: "AUTOMATIC ROUTING OF FORKLIFT ROBOTS IN WAREHOUSE APPLICATIONS", ABCM SYMPOSIUM SERIES IN MECHATRONICS, 12 December 2010 (2010-12-12), pages 335 - 344, XP093262862, Retrieved from the Internet <URL:https://www.abcm.org.br/symposium-series/SSM_Vol4/Section_IV_INDUSTRIAL_INFORMATICS_DISCRETE_AND_HYBRID_SYSTEMS/SSM4_IV_01.pdf> [retrieved on 20250325]
- GUO LI, RUI LIN, MAOHAI LI, RONGCHUAN SUN, SONGHAO PIAO: "A Master-Slave Separate Parallel Intelligent Mobile Robot Used for Autonomous Pallet Transportation", APPLIED SCIENCES, vol. 9, no. 3, pages 368, XP055669424, DOI: 10.3390/app9030368

## Description

### BACKGROUND OF THE INVENTION

### 1. Field of the Invention

The present invention relates to pallet manipulation devices and, more specifically, to a pallet manipulation device that employs a plurality of robots acting in coordination.

### 2. Description of the Related Art

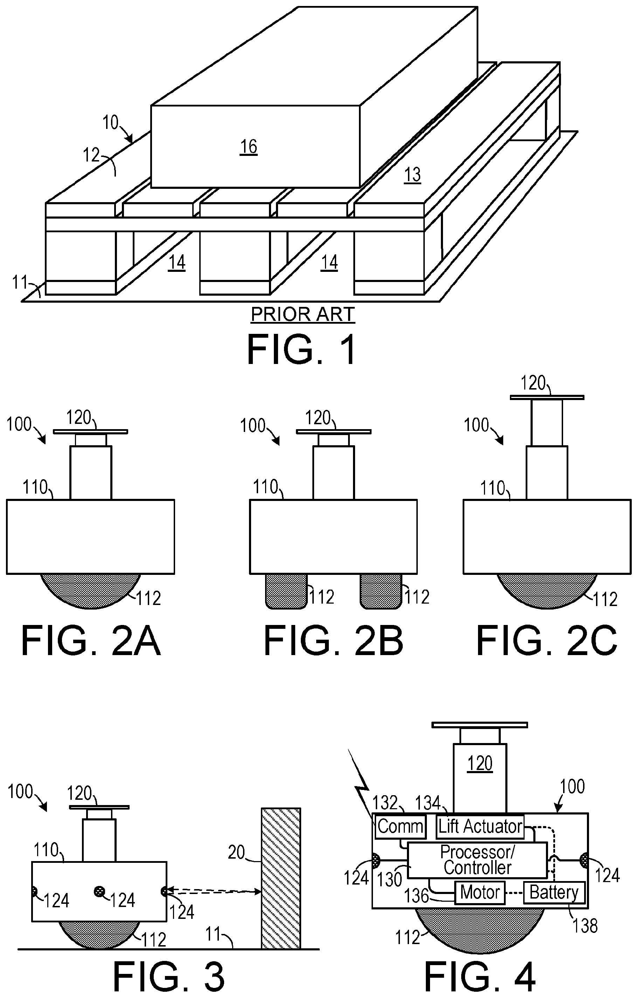

Many industries require the frequent movement of loads throughout warehouses, production facilities and the like. Typical loads can include, for example, palleted objects, machinery, vehicles, etc. As shown in FIG. 1, a typical existing load 10 stored in a warehouse can include an object 16 that is placed on a pallet 12 that is resting on a floor 11. The pallet 12 typically defines two spaced apart open regions 14 disposed underneath a platform 13 upon which the object 16 is placed. The two open regions 14 have dimensions that receive the forks of a forklift therein to facilitate the lifting and moving of the load 10. Some loads do not require pallets, such as automobiles stored in an urban parking lot.

Palletization is a global industry and the needs of the sector are growing. Virtually every form of commerce requires products to be relocated as part of the natural process of shipping. Due to these needs, warehouse storage and the movement of heavy items becomes an extremely important consideration in most forms of commercial enterprises. This movement of heavy items typically requires the operation of forklifts or
hand-trucks, which involves significant risk. In facilities that utilize them, forklifts account for 10% of all physical injuries with an average of 88 deaths and 8,700 injuries in the US per year in the period from 2011 - 2017. Furthermore, humans impose natural limitations to the amount of operations that a warehouse can perform.

One goal in modern warehousing technology is to use robotic systems to remove the uncertainty factor of human error. Unfortunately, robotics is not yet capable of replacing human labor for many factory and warehouse tasks. People are quite good at handling versatile situations with changing needs and at cooperating with one another when necessary. On the other hand, many of today's robotic systems are brittle in that such systems tend to follow a prescribed procedure that can be difficult to program for new tasking and often fails when presented with situations that do not exactly match the expected initial system or environmental conditions. One solution that is often employed is to make the system more complex. Add more parameters that must be tuned by users, or more complex conditions that must be satisfied for mission success. This situation is compounded when one tries to employ groups of cooperating robots and leads to a need for a highly trained user workforce that has both task expertise and robotics expertise. One proposed solution involves a framework that trains the robot rather than the workforce. Such a framework would allow a robot to employ data regarding both when actions are appropriate and the expected outcomes resulting from its actions.

Regardless of the tasking framework, the robots should be able to plan trajectories to accomplish their assigned tasking. This includes individual trajectories as well as trajectories for a collective swarm acting together to accomplish a single, complex task. Even within the domain of planning, robots typically are not designed to share their state space and must find some other technique of coordination. The reason for this is surprisingly simple: modern path planning methods cannot handle high degree of freedom systems. Swarming trajectory planners are usually a combination of search-based methods and heuristic algorithms. Unfortunately, this limits their functionality under changing numbers of units and does not allow for the system to scale the number of units in operation. Furthermore, since these limitations are well understood within the robotics community, the units themselves are typically designed to not cooperate with other units. The consequence of this limitation is that the design of most commercially available robotic systems would not be suitable for practical, swarming systems.

Modern path planning methods are unable to suitably handle swarm systems. Search based path planning methods scale exponentially with dimension, making them infeasible for pathing large systems of a variable number of robots. However, the Artificial Potential Field method is not a search-based algorithm. Instead, it is a mathematical formula for determining the motion of robotic systems. It has some advantages, but the method also has documented drawbacks, and it was largely abandoned as computation power increased and other methods became available. However, a new application of the Artificial Potential Field method, known as the Secant Approach, has guaranteed and well-defined convergence properties. This algorithm has been tested and proven effective for a single mobile robot in a field of static obstacles.

Conventional robotic units have specialized hardware for completing tasks, and complex tasks are accomplished by combining different sets of specialized units. In order to complete a specific task, this requires a specific design for a particular robot. These robots become single-purpose systems, for example, robots to lift racks of items for transport are unable to change their purpose to carry a new type of item or a different type of rack. This leads to the requirement of the entire infrastructure being uniform, which may not be optimal for the tasks required. In one application, this domain is in lifting and transport of varying items and pallets in a warehouse setting.

Generally, current robots with industrial level tasking are not meant to be scalable. The typical model is to have a finite number of systems working together to achieve a set task. These models are either rigid in their tasking (such as the assembly line), or the design is broader with what it can achieve but fewer components are working together (such as a delivery robot). One of the barriers that prevent robot systems from having a scalable number of units is that the methodology to task and plan for these systems does not robustly exist.

Therefore, there is a need for scalable robotic system for moving pallets in which several robots cooperate to lift and move a pallet.

The publication "A Master-Slave Separate Parallel Intelligent Mobile Robot Used for Autonomous Pallet Transportation" Guo Li et al., APPLIED SCIENCES, vol. 9, no. 3, 22 January 2019 (2019-01-22), page 368 discloses a master-slave separate parallel intelligent mobile robot for the fully autonomous transportation of pallets in the smart factory logistics. This separate parallel intelligent mobile robot consists of two independent sub robots, one master robot and one slave robot. A compact driving unit was designed and used to ensure access to the narrow free entry under the pallets. It was also possible for the mobile robot to perform a synchronous pallet lifting action. In order to ensure the consistency and synchronization of the motions of the two sub robots, high-gain observer was used to synchronize the moving speed, the lifting speed and the relative position.

Teixeira Vivaldini Kelen et al. "Automatic Routing of Forklift Robots in Warehouse Applications", ABCM Symposium Series in Mechatronics, 12 December 2010 (2010-1212), pages 335-344 proposes an algorithm that produces optimal routes for AGVs (Automated Guided Vehicles) working inside warehouse as forklift robots. The algorithm was conceived to deal with different real situations, such as the need of conflict-free paths and the presence of obstacles. In the routing algorithm each AGV executes the task starting in an initial position and orientation and moving to a preestablished position and orientation, generating a minimum path. This path is a continuous sequence of positions and orientations of the AGVs.

KR 101 319 045 B1 discloses a mobile robot is placed at a main body, a driving wheel, a wheel driving unit, which includes a drive motor that rotates the driving wheel, an obstacle detection sensor and the sensor unit, which includes the QR camera that takes images of the QR landmarks, and the upper part of the main body. In addition, the mobile robot include the lift driving unit, the lifting unit that includes the supporting plate supporting the lower surface of the palette of which the cargo is loaded on upper end of the lift driving unit, the wireless communications unit located at the main body part and transmits and receives the operation signals of the host end and sensing results of the sensor unit, the main control unit that plans the operations and transportation of the mobile robot according to the results from the image processing of the video information that has been inputted, the motion control unit that produces the control signals which controls the motions of the robot according to the operation plan.

### SUMMARY OF THE INVENTION

The object of the present invention is solved by a system for moving a load on a floor to a selected destination according to claim 1. The dependent claims relate to embodiments of the present invention.

The disadvantages of the prior art are overcome by the present invention which, in one aspect, is a system for moving a load on a floor to a selected destination, wherein the load defines an open region between the load and the floor. The system includes plurality of robots, in which each robot includes at least two wheels driven by a motor, a wireless communications circuit and a processor in communication with the communications circuit and that controls the motor. Each of the plurality of robots is sized to fit in the open area underneath the load. A lifting device is secured to each robot and is controlled by the processor of each robot. The lifting device has a retracted state and a lifting state so that the robot and the lifting device can fit into the open area when the lifting device is in the retracted state and so that the load is lifted off of the floor when the lifting device is in the lifting state. A central server is in communication with the communications circuit of each of the plurality of robots. The central server is configured to determine a configuration of robots to lift the load, to assign selected robots from the plurality of robots to comprise the configuration and to instruct the selected robots to go to a selected position in the open region under the load, lift the load and move the load to the selected destination.

In another aspect, the invention is a method of moving a load to a selected destination, the load having a weight and being disposed on a floor, wherein the load defines an open region between the load and the floor, in which a set of robots is selected from a plurality of robots to move the load. The set of robots has a combined weight lifting capability greater than the weight of the load. Each of the selected robots is directed to the load. Each of the selected set of robots is caused to move to a selected position in the open region. A lift mechanism in each of the selected set of robots is actuated so as to lift the load from the floor. Each of the selected set of robots moves in a coordinated manner to the selected destination. The load is lowered to the floor at the selected destination.
These and other aspects of the invention will become apparent from the following description of the preferred embodiments taken in conjunction with the following drawings. As would be obvious to one skilled in the art, many variations and modifications of the invention may be effected without departing from the scope of the novel concepts of the disclosure.

### BRIEF DESCRIPTION OF THE FIGURES OF THE DRAWINGS

**FIG. 1** is a perspective view of an object placed on a pallet.
**FIG. 2A** is a side view of a self-balancing robot with a lifting device in a retracted state mounted thereon.
**FIG. 2B** is a front view of the self-balancing robot shown in FIG. 2A.
**FIG. 2C** is a side view of the self-balancing robot shown in FIG. 2A in which the lifting device is in a lifting state.
**FIG. 3** is a side view of a robot sensing an obstacle.
**FIG. 4** is a schematic diagram of a robot, including several functional elements associated with the robot.
**FIG. 5A** is a schematic diagram showing a load with two robots disposed in open regions defined thereby.
**FIG. 5B** is a schematic diagram showing the load shown in FIG. 5A being lifted by the robots.
**FIG. 6** is a front view of a robot employing a scissors lift-type lifting device.
**FIGS. 7A - 7D** are a series of schematic diagrams demonstrating a set of robots engaging a load and moving the load to a destination.
**FIG. 8A** is a schematic diagram showing obstacle avoidance by a robot.
**FIG. 8B** is a graph showing a potential field for a concave obstacle.
**FIG.** 9 is an objectives chart detailing the relationship between the hierarchical tasking, Secant Method planner and ubiquitous robot design.
**FIGS. 10A - 10E** are schematic diagrams showing different robot/load configurations.
**FIG.** 11 is a schematic diagram showing robot/load groups of different configurations navigating with respect to each other.

### DETAILED DESCRIPTION OF THE INVENTION

A preferred embodiment of the invention is now described in detail. Referring to the drawings, like numbers indicate like parts throughout the views. Unless otherwise specifically indicated in the disclosure that follows, the drawings are not necessarily drawn to scale. The present disclosure should in no way be limited to the exemplary implementations and techniques illustrated in the drawings and described below. As used in the description herein and throughout the claims, the following terms take the meanings explicitly associated herein, unless the context clearly dictates otherwise: the meaning of "a," "an," and "the" includes plural reference, the meaning of "in" includes "in" and "on."

The IEEE Robotics and Automation Society's P1872-1 Robot Tasking Standards group has been tasked with developing a standardized task frame for robot tasking. This emerging standard has been implemented to perform single vehicle task planning based off of the widely used Planning Domain Definition Language (PDDL) framework implemented in the Robot Operating System (ROS) framework. Under PDDL, a finite set of robotic actions exist with each action containing predetermined preconditions that must be true for an action to execute, maintenance conditions that must be true throughout an action, and expected effects that will occur as a result of the action. An AI-based planning framework is then able to construct a plan that takes the system from its current state to the goal state. Through this technique, the end-user only needs to specify the starting state of the system and the desired goal state. The system then reasons over how to achieve this goal, monitors its progress to the goal, and corrects for any errors that occur along the way through re-planning. The present invention extends this planning paradigm to work with swarms of vehicles.

In one representative embodiment, the invention includes a hierarchical planning system for a swarm of robots employed in the shifting of objects. Higher-level path planning is employed in state machine tasking. The system employs selects single robots and sets of robots, from a plurality of robots, that are deployed to lift and move an load.

Typically, a server will receive a request to move a load from a first location to a destination. The server will evaluate the load in terms of weight and dimensions and select a set of robots that has the combined ability to lift and move the load to the destination. Once the robots have been assigned to move the load, they communicate with each other so as to behave as a single robot.

As shown in FIGS. 2A - 2C, one embodiment of a robot **100** that can be used in the plurality of robots includes a self-balancing transporter **110** that typically includes at least two wheels **112** and a lifting device **120.** The lifting device **120** has a retracted state (as shown in FIGS. 2A and 2B) in which the robot **100** can fit in open regions **14** underneath a platform **13** of the load **10** (referring to FIG. 1). The lifting device **120** also has an extended lifting state (as shown in FIG. 2C) that extends the lifting device **120** to a height sufficient to lift the load **10** away from the floor **11.** As shown in FIG. 3, at least one of the robots **100** in the set selected by the server includes a sensor **124** (for example, a LIDAR sensor, other examples of sensors that can be employed include: ultrasonic, video, GPS, light sensing, touch sensing, humidity, temperature, and any one of many other types of sensors known to the sensor arts, depending upon the specific application) that can sense the presence of an obstacle **20** or other object - such as another robot - to facilitate collision avoidance. The information from the sensor is processed using a collision avoidance algorithm (e.g., the Secant Method) to prevent collisions between the robots.

As shown in FIG. 4, a typical robot **100** employed in the system is controlled by a processor/controller **130** that is in communication with the server and other robots via a communications circuit **132.** As will be understood, the communications circuit **132** can include circuitry that facilitates communication using one or a combination of the many communication standards known to those of skill in the robotic arts (e.g., Wi-Fi, Bluetooth, ZigBee, etc.). The processor **130** also controls a lift actuator **134** that actuates the lifting device **120** between the extended and retracted states. The processor **130** controls a motor **136** that moves the wheels **112.** The robot **100** is powered by a battery **138** such as a rechargeable lithium-ion battery.

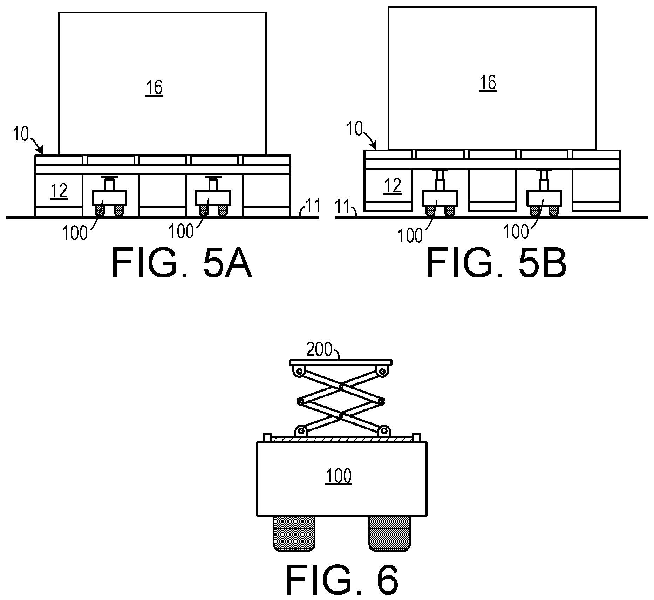

The robots 100 moved into position under a load **10** is shown in FIG. 5A and the lifting of the load **10** by the robots **100** is shown in FIG. 5B.

While all of the robots in the system could be identical, different types of robots could also be used. For example, some of the robots could employ complex sensor and control suites, while other robots could be passive - taking directions from a more complex robot. Also, while two wheeled robots are show, some robots could employ more than two wheels. Also, different robots might have different lift capacities and their batteries could have different charge holding capacities. Also, different types of lifting devices couple be employed. For example, as shown in FIG. 6, in one embodiment, the lifting device includes a scissors lift **200** coupled to the robot **100.**

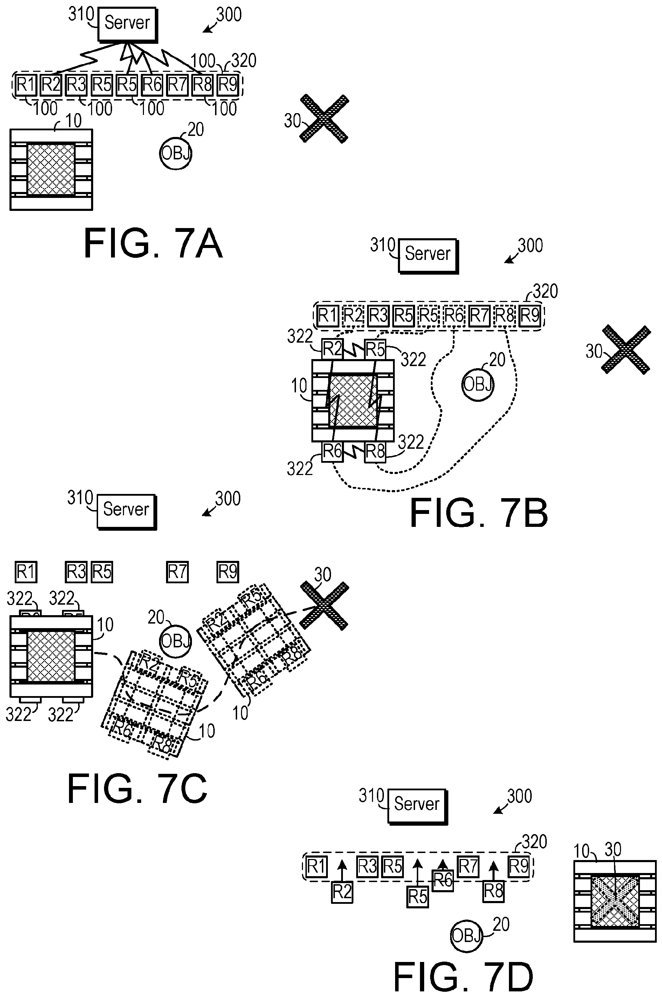

A central server stores such information about the robots as: their individual lift capabilities, their current charge states and their current locations. The server then selects robots to form the set based on their combined ability to move the load to the destination. For example, as shown in FIGS. 7A - 7D, the system **300** typically includes a server **310** that controls a plurality of robots **320** (shown as robots **R1** - **R9).** In FIG. 7A, the server **310** has received a request to move load **10** from its current location to a destination **30.** Based on information provided to the server **310** regarding the weight, weight distribution and dimensions of the load, the server **310** has selected and assigned robots **R2, R5, R6** and **R8** to the set to lift and move the load. In FIG. 7B, the selected robots in the set **322** communicate with each other to move to their assigned positions below load **10** in a coordinated manner. The path of movements of the robots in the set **322** can be calculated in the robots' processors. In one embodiment, the server can calculate all of the movements of the robots and transmit movement directions to the selected robots. Robots **R6** and **R8** are required take a path around an obstacle **20** to get to the load, which is calculated employing an object avoidance algorithm, such as by using the Secant Method.

As shown in FIG. 7C, the set **322** of robots engage the load **10,** lift it and move it to the destination **30** in concert with each other, while avoiding the obstacle **20** in doing so. Once the load **10** has been delivered to the destination **30,** the robots retract the lifting device, move out from under the load **10** and return to an assigned location to await instructions regarding a subsequent lifting operation, as shown in FIG. 7D. One robot might indicate to the server **310** that it no longer has sufficient battery capacity to reach the selected destination. In this case, the server **310** will direct that first robot away from the load and substitute it with another robot, which moves to the load and joins the set of robots tasked with moving the load **10.**

The present invention employs an adaptive planning paradigm. This system includes a reasoning engine that reasons over logical predicates and a notion of actions that reside in the world model. This produces a logical task plan that can be understood by humans and that provides goals to the deliberative system. This logical planner provides an understanding of the state of the world as well as the consequences (effects) and requirements (constraints/preconditions) of its actions. It is also able to understand if action failures occur. As actions are performed, the system is able to reason over action failures to change probabilities of success or add/remove requirements on particular actions. These action sequences are derived through the use of a PDDL planning system that augments the standard ROSPlan framework. The ROSPlan framework, which is well known in the robotic arts, provides a collection of tools for AI Planning in a ROS system. ROSPlan has a variety of nodes which encapsulate planning, problem generation, and plan execution. An example of this form of plan would be a series of human readable task descriptions such as "Robot 1 undock; Robot 1 navigate to pallet 23; Robot 1 dock with pallet 23; Robot 1 lift". Note that while these plans are logically consistent, they are not able to be actually executed on a conventional robot system. Each task must first be grounded to metric information related to the world model instances (e.g. where is pallet 23 located). The framework of the present invention provides this coupling of logical and metric information for use in our planning hierarchy. Additional contributions to this framework include:

*Core schema and extensions:* An XML based core schema contains all of the classes and definitions necessary for the implementation of this system. In addition, domain dependent extensions to this schema allow for a physical planning system in domains ranging from bio manufacturing to autonomous vehicle control.

*Logical vs Physical planning*: PDDL is designed to operate in a logical planning environment. For example, several vehicles could be ordered to coordinate at a given named waypoint. However, the decoding of that named waypoint into a physical location is necessary for the computation of cost and for detailed planning. This issue is addressed by a real-time database that contains information that couples the logical and physical planning domains. This database is formatted to match the schema, and the creation, maintenance, and access is controlled through auto-generated code.

*Automatic code generation:* The system makes extensive use of the open source ROSPlan framework for generating, evaluating, and dispatching logical plans with PDDL. ROSPlan requires a database of logical types and instances for its operation. The physical planning environment requires metric information that is coupled to these instances. To accommodate both systems, the system employs a package that reads the schema and generates both a logical and physical database for use by the planners. In addition, C++ classes are generated for all types along with access functions that allow for seamless access to all class variables with reading and posting to the appropriate databases.

*Ability to encode a Finite State Machine (FSM)*: PDDL planners are near-optimal and are not guaranteed to converge to the optimal solution over a fixed time period. For many high-level behaviors, experts systems have already created an optimal solution to the activity that is composed of a FSM with defined actions and an AI planning system is not necessary to find the solution. In these cases, the present framework allows a user to follow a simple format for describing the intended FSM. A plan dispatcher is then able to read this FSM and treat it as if it was designed by the PDDL planning system. This includes the checking of preconditions and effects. While the user may define preconditions and effects for the overall FSM, the dispatcher will also guarantee that individual atomic action preconditions and effects are met. Thus, the effect of the FSM will be the combination of the effects of all of the low-level actions with the user described high-level effects. Also, one embodiment can use behavior trees instead of FSM and ultrasonic geo-location instead of an Optitrack system.

*Hierarchical planning: One* effect of the use of FSMs with preconditions and effects is the ability to now use these FSMs as atomic actions. The framework provides the ability to recursively decompose composite actions during execution. This allows for a planning hierarchy to be utilized where automatically generated plans and FSMs can call upon FSMs as part of their plans.

*Implementation of ROS action servers:* In order to ease debug and development, all low-level actions for the framework are developed as ROS action servers. This allows for each action to be independently debugged and characterized.

*Visual programming: O*ne addition to the framework can include a visual programming interface that allows for drag-n-drop programming of robotic activities.

The adaptive planning framework employed in the invention employs task allocation for swarms of platforms addressing multiple objectives through an auction based approach. This provides a platform for task assignment for each requested swarm task. Load-balancing (how many platforms and of what type are assigned for each task to assure success) and incorporation into the hybrid architecture are part of the system.

*The Secant Method:* Artificial Potential Field (APF) path planning method was originally intended as a means of path planning for systems with extremely low processing power (by modern standards). The challenge for the previous era of roboticists was simple: computers could not be simultaneously mobile and have a substantial amount of processing. Therefore, APF methods arose as an ideal solution. APF methods are a mathematical model that informs the desired state of the robot. By modeling a target position as an attractive force and obstacles as repulsive forces, the algorithm aims to avoid collisions while converging on the target. The benefit of APF methods cannot be understated: the algorithm is extremely computationally efficient. However, in modern robotics, another benefit exists that is often overlooked; the system scales linearly with dimension. This property differs from grid based algorithms that have exponential growth or search based methods that have probabilistic convergence and exponential growth with dimension. Since APF functions grow linearly with dimension, they become an ideal candidate for swarm applications where the number of units can change dynamically.

While APF algorithms have characteristics that would be ideal for generalized path planning, APF methods also have some well documented performance issues. The primary problem is convergence: general APF methods are not guaranteed to converge to within a specified domain of the target (they can get stuck). However, other well-known issues exist, such as: oscillation in narrow pathways. Some systems employing APF planning of swarms often assuage this issue by removing ground based obstacles and focusing on UAV type motion. These limitations, combined with increased processing power, have pushed other path planning algorithms into greater prominence in modern robotics.

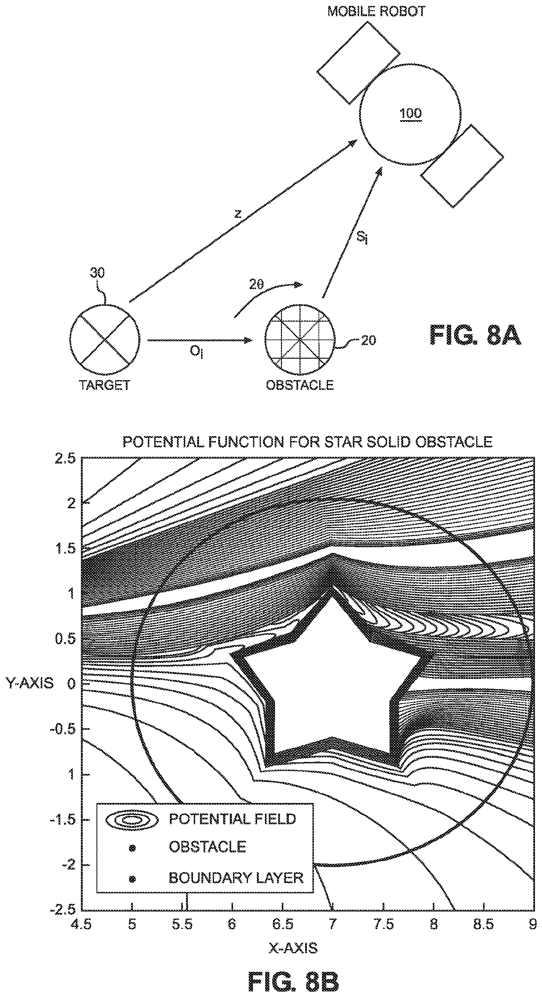

The present invention applies a modified APF approach, referred to as "The Secant Method" (as shown in FIG. 8A) as a means of guaranteeing target convergence and collision avoidance for a swarm of robots in a well-known field. The Secant Method, as stated below in Equation 1, has favorable properties that make it ideal for path planning. Most importantly, this algorithm has guaranteed target convergence for arbitrarily shaped obstacles (including concave shapes, as shown in FIG. 8B). The Secant Method also carries with it the benefits of general APF methods. It scales linearly with dimension and is computationally light weight. Another opportunity with the Secant Method is its ubiquity towards different types of robots. It will work equally well with a small platform robot as it will with a larger mobile unit. Therefore, teams of small systems could be virtually "chained" together and commanded as a single system by the same algorithm. The Secant Method leverages the best aspects of APF theory and introduces guaranteed convergence properties that make it an ideal solution for swarm systems. $Ψ \left(z\right) = \frac{1}{2} {k}_{p} {z}^{T} z + \frac{1}{2} {\sum }_{i} {k}_{i} \frac{{z}^{T} {zsec}^{2} \left(θ\right)}{{\left‖z-{o}_{i}\right‖}^{2}}$ (1)

Equation 1 sets forth a potential function generated by the Secant Method. The relevant vectors are shown in FIG. 8A, and *kₚ* and *kᵢ* are positive constants.

*The Ubiquitous Robot Desig*n: A ubiquitous robotic design is a system whose task domain changes with the number of units available. More complex designs with specialized hardware are certainly possible to augment the ubiquitous robot, but the intention here is to restructure how tasking is perceived. To that end, the robots focus on scalability with a broad tableau that allows for a wide range of customizability. The robots can be used by non-robotics experts so that the systems can work in a wide range of environments and achieve a significant societal impact.

The system does not address every scenario that might be encountered by a swarm of robotics. Instead, the tasking itself can be redefined considering the concept of scalable robotics. As such, the robot design does not have specialized equipment to handle every warehouse logistics issue, but rather, it focuses focus on a specific and known need within industry, such as moving pallets and objects within a confined setting. For example, four robots might be necessary in order to move a pallet of a certain weight. However, with the scalable design, 2 times as many robots could be tasked to move a pallet 2 times as heavy, or twice as big. Since the number of units change with tasking rather than the unit itself, the system does not need access to more powerful robots to lift the heavier pallets.

The system employs task-oriented robotic swarms; therefore, the robot is designed such that one unit can work with any number of partners. It should be noted that the same methods developed here can be applicable to different types of systems. Furthermore, the robots could be modified to handle different specialty tasks. Also, different robot designs can be brought to work together (e.g. a platform robot and a robotic arm could be given simultaneous tasking).

By combining state-of-the art hierarchical task planning with path planning, the system changes the paradigm in which robotics is viewed. Commonly, a single robot or robot type is designed to accomplish a single task. This system, on the other hand, can employ a swarm of robots working in a coordinated manner: the task domain of each robot is affected by the number of robots utilized. Instead of using a stronger robot to lift heavier weights, a set of robots of the same type can move more massive objects by teaming together.

In one embodiment, the system takes a hierarchical planner designed for system abstraction and applies it to swarm technology in order to concurrently task changing groups of robots under dynamic tasking. The hierarchical tasking expands on the idea of a detailed swarm allocation and hybrid logical/deliberative single platform planning system. The result is a system that can operate heterogeneous swarms of robot platforms while providing human understandable plans that cover multiple objectives.

A convergent planner is designed for single unit path planning and its formation is modified so that it might apply to swarm technology with multiple unit convergence in the presence of moving obstacles. The invention expands the Secant algorithm to be applicable for multiple robotic systems avoiding one another as they converge on their respective targets. An important benefit of this system is that it is computationally inexpensive and that the path planning requirements expands linearly with dimension. These two properties combine to create a system which can plan the routes of large numbers of robots while ensuring that the individual units avoid collisions.

The task domain of a system of robots can be viewed as a function of the number of robotic units rather than the functionality contained within a single unit. Instead of assigning a robot to a task, a task can map to a group of robots and achieve results. Thus, the system employs a set of individual mobile robots that can complete tasking through both their individual capabilities and by scaling their numbers. The robots can be a mix of sensor-rich and sensor-poor systems, focusing on having the same primary capability: lifting boxes, pallets, and various other items. The tasks that the system can complete can change based on the number of robots used for the task. For example, lighter loads can be achieved with small numbers of units (or even a single unit) and heavier loads will be transported using proportionally more mobile systems. In addition, loads requiring specialized formations (such as beams) can be achieved by changing the configuration patterns of multiple systems working together.

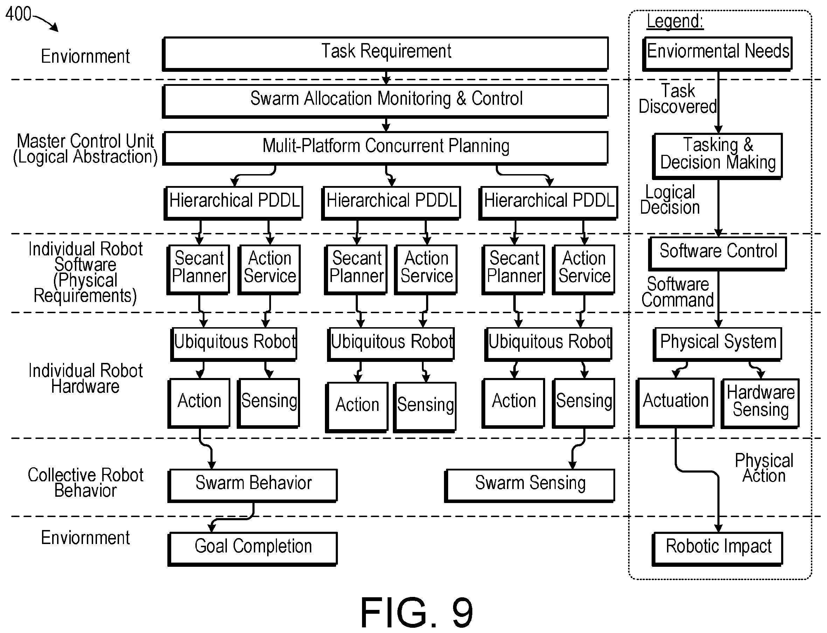

An Objectives Chart 400 detailing the relationship between the hierarchical tasking, Secant Method planner, and Ubiquitous robot design is shown in FIG. 9. Task requirements and constraints will flow from the user to the master control unit which provides a logical solution to the task problem. This solution applies an auction based approach to match task requirements to platform capabilities in order to build a near-optimal team for accomplishing the task. The master control unit further decomposes the tasking into a series of concurrent logical tasks for execution. Each of these tasks is dispatched to individual robot software services where our joint database is utilized to ground the logical tasks into physical actions for the robots. These actions are then executed on the individual robot hardware resulting in a collective robot behavior that operates on the environment.

Robotic swarm: A surrogate platform that is both low-cost and simple to operate is utilized along with control logic using the Secant Method. There are several open-source options that can be used, for example the Sainsmart Instabot self-balancing robot system may be used in one representative embodiment, along with an Arduino Mega microcontroller. They can be fitted with an Optitrack system, allowing for precise localization as part of the task planning and control logic.

Mobile heavy-lift platforms provide low-profile, small footprint systems, including two hub-motor style wheels in the center of the platform allowing for differential drive. They operate on an inverted pendulum self-balancing controller. This reduces the necessary number of motors while allowing for high torque and heavy lift capability as well as providing dynamic motion and control. Similar systems exist currently in the consumer space. For example, Segway Drift Hovershoes are capable of carrying a load of 220 pounds at up to 7.5 miles per hour with a single hub motor per unit.

All parts in one experimental embodiment are commercially available, leading to a highly composable hardware system that can be used for many purposes. An Nvidia Jetson TX2 can be utilized as the primary processing unit. A combination of LIDAR and stereo depth imaging sensors can be integrated, allowing for obstacle detection and safe navigation. A compact lifting mechanism can be mounted to the top of the platform allowing for lifting and carrying objects and pallets. A brushless motor controller can also be used. The experimental embodiment is powered by a LIPO battery pack with a battery management system. The frame includes 80/20 extrusion. The Robot Operating System (ROS) is heavily leveraged for robot control.

Several different assumptions regarding the space in which the experimental embodiment is used, including: the area of use is a completely known space; localization can be achieved through external sensing mounted within the space and will deliver information to the robots frequently and with high accuracy. Obstacles will exist within the space, but their position can either be tracked or is otherwise known. There are also designated areas for loading and unloading pallets. In the experimental embodiment, a certain level of infrastructure is used alongside the swarms. The system needs to be able to control each robot remotely. To that end, a master controller on an external computer is used.

An important component of both the task planning logic and the Secant Method is the use of a central processing framework for remotely managing the systems. While each system can have a subset of individual autonomous capability, the primary tasking, planning and control will occur on the server. The map of the environment can also be housed here. This server communicates with the Optitrack system, providing real-time localization information for all agents, obstacles, and objects in the environment. It also communicates directly with the individual robots to manage task assignments, and provides all navigation commands. ROS can be heavily utilized for this implementation. Optitrack markers can be installed on the each robotic platform to provide localization information to the master controller. Each system is equipped with wireless communication. The server can provide all navigation functionality, calculating motor velocity commands and transmitting them directly to each robot.

The experimental embodiment incorporates an auction-based planning system for swarm allocation and maintenance. Individual platform plans flow down to the individual platforms and these plans are implemented on the physical system by the master control unit. This system ise responsible for determining the high-level tasking of the swarm, monitoring the fitness of each individual robot, as well as evaluating the task performance. The high-level planner can include all the types of tasks that may be required of the swarm and can determine when, how, and who should execute these tasks.

The Secant Method is adapted to the physical hardware. The system can take commands from the hierarchical planner and achieves a trajectory that converges on the goal position while avoiding obstacles.

An important functionality involves robots forming patterns and moving simultaneously as a single unit. The benefit of the differential drive system is that they are extremely agile. As such, the robots are able to move while maintaining the same relative distance and orientation to one another. This functionality can be augmented with basic path planning and obstacle avoidance routines via the Secant Method.

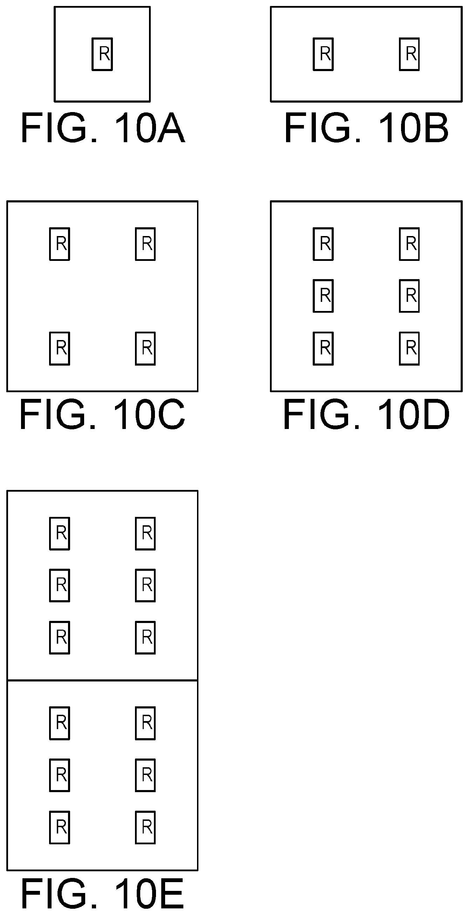

As shown in FIGS. 10A-10E, the system can form different combinations of robots to work in concert. For example, a single robot can be used to move a relative light load, as shown in FIG. 10A and two robots can be used to move a half pallet, as shown in FIG. 10B. Four robots can be used to move a full pallet, as shown in FIG. 10C, whereas six robots can be used to move a heavier pallet, as shown in FIG. 10D. A heavy double pallet, as shown in FIG. 10E, could require 12 robots working in concert. It will be readily appreciated that many other configurations are possible. In these configurations, the robots are commanded to move as a single unit from one location to another. It is important to ensure they move uniformly in tandem.

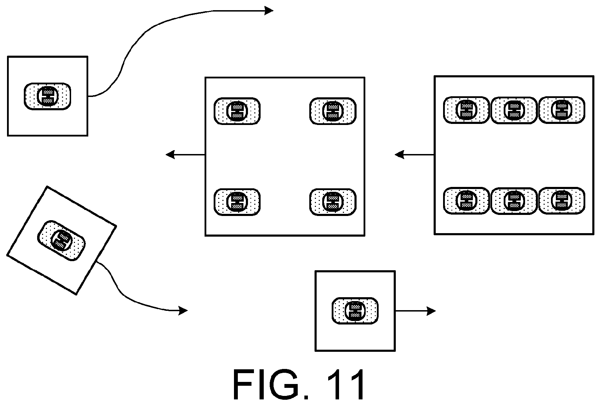

Each platform will running a local version of ROS, allowing for fully independent autonomous control. Dynamic obstacle detection and avoidance capability is implemented on the units using data acquired via the sensors. This dynamic obstacle data can be communicated to the master server for insertion into the map, enabling adaptive navigation of the entire swarm with dynamic obstacles in the environment. Errors can be corrected at the lowest level possible (e.g. each robot will attempt to self-correct before giving up and asking for guidance from higher in the hierarchy). As a result, the swarm can be self-healing from both minor failures and major platform malfunctions. One important aspect of the system is that it has the capability to navigate simultaneously with groups of mixed-footprint systems that are linked, as shown in FIG. 11.

Hierarchical planners for large swarms of robotics can suffer from concurrent events and shifting objectives. Thus, higher-level path planning is essentially state machine tasking. Typically, a successive order is generated which dictates what actions are done depending on which conditions are met. The Hierarchical Planning method employed allows for changing states to occur within the system, which in turn indicates that the system can self-diagnose and error check. Also, concurrent actions can be performed and that tasks do not need to be predefined. Applying this technology to swarms creates a system capable of handling shifting and changing objectives that is currently impossible.

Some swarms combine the most difficult elements of path planning into a single system. High dimensional path planning for search or optimization methods require nonlinear growth per dimension. The consequence is that path planning for larger order systems relies on heuristic algorithms to simplify the problem. The unintended consequence of this behavior is that the system is then very difficult to scale. Thus, in modern path planning, even systems that are capable of handling swarms of systems may not be scalable. To handle this, the present system utilizes the Secant Method, which is an approach to Artificial Potential Fields that has been modernized and mathematically improved. It is not a search or optimization method. Instead, it is dependent on potential fields and has guaranteed convergence properties. Fundamentally, it also scales linearly with dimension. **In** swarm applications, this means that doubling the number of robots will double the processing requirement of the robots. However, every robot that is added will also add another processing unit to control the robot. Therefore, the processing power of a swarm of robots also scales linearly with dimension. When the path planning is done locally on the system and sufficiently fast, then the path planner itself ceases to be the bottleneck in swarm robotics.

The system offloads the tasking of the robots to a hierarchical task planner, which is able to work with variable numbers of systems to be able to accomplish abstracted tasks. Therefore, the person tasking the robot can give the instructions as complicated or as simple as necessary in a manner that is accessible to a robotics novice, and the planner can create the low-level commands necessary to achieve the tasking.

Although specific advantages have been enumerated above, various embodiments may include some, none, or all of the enumerated advantages. Other technical advantages may become readily apparent to one of ordinary skill in the art after review of the following figures and description. It is understood that, although exemplary embodiments are illustrated in the figures and described below, the principles of the present disclosure may be implemented using any number of techniques, whether currently known or not. Modifications, additions, or omissions may be made to the systems, apparatuses, and methods described herein without departing from the scope of the invention. The components of the systems and apparatuses may be integrated or separated. The operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

The above-described embodiments, while including the preferred embodiment and the best mode of the invention known to the inventor at the time of filing, are given as illustrative examples only. It will be readily appreciated that many deviations may be made from the specific embodiments disclosed in this specification without departing from the scope of the invention. Accordingly, the scope of the invention is to be determined by the claims below rather than being limited to the specifically described embodiments above.

## Claims

1. A system (300) for moving a load (10) on a floor to a selected destination, wherein the load (10) defines an open region between the load (10) and the floor, comprising:
(a) a plurality of robots (320), each robot (100) including at least two wheels (112) driven by a motor (136), a wireless communications circuit (132) and a processor (130) in communication with the communications circuit (132) and that controls the motor (136), each of the plurality of robots (100) sized to fit in the open area underneath the load (10);
(b) a lifting device (120) secured to each robot (100) and controlled by the processor of each robot (100), the lifting device (120) having a retracted state and a lifting state so that the robot (100) and the lifting device (120) can fit into the open area when the lifting device (120) is in the retracted state and so that the load (10) is lifted off of the floor when the lifting device (120) is in the lifting state; and
(c) a central server (310) in communication with the communications circuit (132) of each of the plurality of robots (100), the central server configured to determine a configuration of robots to lift the load(10), to assign selected robot (100)s from the plurality of robots (320) to comprise the configuration and to instruct the selected robots (100) to go to a selected position in the open region under the load (10), lift the load (10) and move the load (10) to the selected destination;
**characterized in that**
(d) each of the plurality of robots (100) includes a battery (138) and wherein each of the plurality of robots (100) reports a current charge state of the battery (138) to the central server, wherein when the central server selects robots (100) it determines that the battery (138) of each selected robot (100) has a sufficient amount of charge so that the selected robots (100) will be able to lift and move the load (10) to the selected destination; and
(e) each of the robots (100) comprises self-balancing transporter.

2. The system (300) of Claim 1, wherein the load (10) comprises a pallet (23) and an object disposed thereon.

3. The system (300) of Claim 1, wherein the processor in each of the selected robots (100) communicates with each other of the selected robots (100) to coordinate lifting and moving of the load (10), wherein each of the selected robots (100) is controlled by the central server (310) to coordinate the selected robots (100) lifting and moving of the load (10).

4. The system (300) of Claim 1, wherein each of the selected robots (100) employ a collision avoidance system to avoid colliding with each other, wherein the collision avoidance system employs a secant method.

5. The system (300) of Claim 1, wherein at least one of the selected robots (100) includes at least one object sensor5, wherein the object sensor includes a sensor technology selected from a list consisting of: LIDAR, ultrasonic, video, GPS, light sensing, touch sensing, humidity, temperature and combinations thereof.

6. The system (300) of Claim 1, wherein at least one of the selected robots (100) includes a load sensor.

7. The system (300) of Claim 1, wherein the lifting device (120) comprises a linear actuator (134) and/or a scissors lift.

## Patentansprüche

1. System (300) zum Bewegen einer Last (10) auf einem Boden zu einem ausgewählten Zielort, wobei die Last (10) einen offenen Bereich zwischen der Last (10) und dem Boden definiert, umfassend:
(a) eine Mehrzahl von Robotern (320), wobei jeder Roboter (100) zumindest zwei von einem Motor (136) angetriebene Räder (112), eine drahtlose Kommunikationsschaltung (132) und einen Prozessor (130) umfasst, der mit der Kommunikationsschaltung (132) in Verbindung steht und den Motor (136) steuert, wobei jeder der Mehrzahl von Robotern (100) so dimensioniert ist, dass er in die Öffnung unterhalb der Last (10) passt;
(b) eine an jedem Roboter (100) befestigte und vom Prozessor jedes Roboters (100) gesteuerte Hebeeinrichtung (120), wobei die Hebeeinrichtung (120) einen eingefahrenen Zustand und einen Hebezustand aufweist, so dass der Roboter (100) und die Hebevorrichtung (120) in den freien Bereich passen, wenn sich die Hebeeinrichtung (120) im eingefahrenen Zustand befindet, und so dass die Last (10) vom Boden angehoben wird, wenn sich die Hebeeinrichtung (120) im Hebezustand befindet; und
(c) einen zentralen Server (310), der mit der Kommunikationsschaltung (132) jedes der Mehrzahl von Robotern (100) in Verbindung steht, wobei der zentrale Server so ausgestaltet ist, dass er eine Ausgestaltung von Robotern zum Anheben der Last (10) ermittelt, ausgewählte Roboter (100) aus der Mehrzahl von Robotern (320) zuweist, um die Ausgestaltung zu umfassen, und die ausgewählten Roboter (100) anweist, sich zu einer ausgewählten Position in dem offenen Bereich unterhalb der Last (10) zu begeben, die Last (10) anzuheben und die Last (10) zum ausgewählten Zielort zu transportieren;
**dadurch gekennzeichnet, dass**
(d) jeder der Mehrzahl der Roboter (100) eine Batterie (138) umfasst und wobei jeder der Mehrzahl der Roboter (100) einen aktuellen Ladezustand der Batterie (138) an den zentralen Server meldet, wobei der zentrale Server, wenn er Roboter (100) auswählt, ermittelt er, dass die Batterie (138) jedes ausgewählten Roboters (100) über eine ausreichende Ladung verfügt, so dass die ausgewählten Roboter (100) in der Lage sind, die Last (10) anzuheben und zum ausgewählten Zielort zu bewegen; und
(e) jeder der Roboter (100) einen selbstbalancierenden Transporter umfasst.

2. System (300) nach Anspruch 1, wobei die Last (10) eine Palette (23) und ein darauf angeordnetes Objekt umfasst.

3. System (300) nach Anspruch 1, wobei der Prozessor in jedem der ausgewählten Roboter (100) mit den anderen ausgewählten Robotern (100) kommuniziert, um das Anheben und Bewegen der Last (10) zu koordinieren, wobei jeder der ausgewählten Roboter (100) von dem zentralen Server(310) gesteuert wird, um die ausgewählten Roboter zu kontrollieren, die die Last
(10) heben und senken.

4. System (300) nach Anspruch 1, wobei jeder der ausgewählten Roboter (100) ein Kollisionsvermeidungssystem einsetzt, um Kollisionen untereinander zu vermeiden, wobei das Kollisionsvermeidungssystem ein Sekantenverfahren verwendet.

5. System (300) nach Anspruch 1, wobei mindestens einer der ausgewählten Roboter (100) zumindest einen Objektsensor umfasst, wobei der Objektsensor eine Sensortechnologie umfasst, die aus einer Liste ausgewählt ist, bestehend aus: LIDAR, Ultraschall, Video, GPS, Lichtsensorik, Berührungssensorik, Feuchtigkeitsmessung, Temperaturmessung und Kombinationen davon.

6. System (300) nach Anspruch 1, wobei mindestens einer der ausgewählten Roboter (100) einen Lastsensor umfasst.

7. System (300) nach Anspruch 1, wobei die Hebevorrichtung (120) einen Linearaktor (134) und/oder eine Scherenhebebühne umfasst.

## Revendications

1. Système (300) permettant de déplacer une charge (10) sur un sol jusqu'à une destination sélectionnée, dans lequel la charge (10) définit une région ouverte entre la charge (10) et le sol, comprenant :
(a) une pluralité de robots (320), chaque robot (100) incluant au moins deux roues (112) qui sont entraînées par un moteur (136), un circuit de communication sans fil (132) et un processeur (130) en communication avec le circuit de communication sans fil (132) et qui commande le moteur (136), chacun de la pluralité de robots (100) étant dimensionné de manière à pouvoir être logé dans la zone ouverte située au-dessous de la charge (10) ;
(b) un dispositif de levage (120) fixé à chaque robot (100) et commandé par le processeur de chaque robot (100), le dispositif de levage (120) présentant un état rétracté et un état de levage de telle sorte que le robot (100) et le dispositif de levage (120) puissent être logés à l'intérieur de la zone ouverte lorsque le dispositif de levage (120) est dans l'état rétracté et de telle sorte que la charge (10) soit soulevée du sol lorsque le dispositif de levage (120) est dans l'état de levage ; et
(c) un serveur central (310) en communication avec le circuit de communication sans fil (132) de chacun de la pluralité de robots (100), le serveur central étant configuré pour déterminer une configuration de robots afin de soulever la charge (10), pour affecter des robots (100) sélectionnés parmi la pluralité de robots (320) afin de constituer la configuration et pour ordonner aux robots (100) sélectionnés d'aller jusqu'à une position sélectionnée dans la région ouverte située sous la charge (10), de soulever la charge (10) et de déplacer la charge (10) jusqu'à la destination sélectionnée ;
**caractérisé en ce que** :
(d) chacun de la pluralité de robots (100) inclut une batterie (138) et dans lequel chacun de la pluralité de robots (100) communique au serveur central un état de charge courant de la batterie (138), dans lequel, lorsque le serveur central sélectionne des robots (100), il détermine que la batterie (138) de chaque robot (100) sélectionné dispose d'un niveau de charge suffisant de telle sorte que les robots (100) sélectionnés soient en mesure de soulever et de déplacer la charge (10) jusqu'à la destination sélectionnée ; et
(e) chacun des robots (100) comprend un dispositif de transport auto-équilibré.

2. Système (300) selon la revendication 1, dans lequel la charge (10) comprend une palette (23) et un objet disposé sur celle-ci.

3. Système (300) selon la revendication 1, dans lequel le processeur dans chacun des robots (100) sélectionnés communique avec chaque autre robot des robots (100) sélectionnés afin de coordonner le levage et le déplacement de la charge (10), et dans lequel chacun des robots (100) sélectionnés est commandé par le serveur central (310) afin de coordonner le levage et le déplacement de la charge (10) par les robots (100) sélectionnés.

4. Système (300) selon la revendication 1, dans lequel chacun des robots (100) sélectionnés utilise un système d'évitement de collision afin d'éviter l'entrée en collision des robots les uns avec les autres, et dans lequel le système d'évitement de collision utilise une méthode de la sécante.

5. Système (300) selon la revendication 1, dans lequel au moins l'un des robots (100) sélectionnés inclut au moins un capteur d'objet, et dans lequel le capteur d'objet inclut une technologie de capteur qui est sélectionnée à partir d'une liste constituée par : LIDAR, ultrasons, vidéo, GPS, détection de lumière, détection tactile, humidité, température et leurs combinaisons.

6. Système (300) selon la revendication 1, dans lequel au moins l'un des robots (100) sélectionnés inclut un capteur de charge.

7. Système (300) selon la revendication 1, dans lequel le dispositif de levage (120) comprend un actionneur linéaire (134) et/ou un élévateur à ciseaux.
